(19) Europäisches Patentamt
European Patent Office
Office européen des brevets

(11) Veröffentlichungsnummer: **0 434 925 A2**

# (12) EUROPÄISCHE PATENTANMELDUNG

(21) Anmeldenummer: **90120664.9**

(22) Anmeldetag: **29.10.90**

(51) Int. Cl.⁵: **C08G 63/78**, C09D 167/02, C09J 167/02

(30) Priorität: **28.12.89 DE 3943129**

(43) Veröffentlichungstag der Anmeldung: **03.07.91 Patentblatt 91/27**

(84) Benannte Vertragsstaaten: **CH DE FR GB IT LI NL**

(71) Anmelder: **HÜLS AKTIENGESELLSCHAFT**
**Patentabteilung / PB 15 - Postfach 13 20**
**W-4370 Marl 1(DE)**

(72) Erfinder: **Klein, Vaclav**
**Markerbenhöhe 58**
**W-5810 Witten(DE)**
Erfinder: **Dyllus, Josef**
**Am Hang 26**
**W-5810 Witten(DE)**

## (54) Verfahren zur Herstellung von thermoplastischen, hochmolekularen Copolyestern.

(57)

1. Verfahren zur diskontinuierlichen Herstellung von thermoplastischen, hochmolekularen Copolyestern.

2.1 Während bei der Herstellung von Poly-1,4-butylenterephthalat bekannt ist, das während der Polykondensation anfallende Destillat wiederzuverwenden, ist diese Maßnahme bei der Herstellung von Copolyestern unbekannt. Es besteht daher das Bedürfnis, diese ressourcenschonende und wirtschaftliche Maßnahme auch bei der Copolyesterherstellung anzuwenden.

2.2 Die Erfindung beschreibt ein Verfahren zur Herstellung von thermoplastischen, hochmolekularen Copolyestern durch Umesterung, Veresterung und Polykondensation der Ausgangskomponenten in Gegenwart eines Katalysators in der Schmelze unter Ausschluß von Sauerstoff, wobei 5 bis 30 Gew.-% der reinen Diolkomponente durch das bei der Polykondensation angefallene Diol(gemisch) ersetzt und das nicht vorbehandelte, das Diol(gemisch) enthaltende Destillat in die Veresterung zurückgeführt wird.

EP 0 434 925 A2

# VERFAHREN ZUR HERSTELLUNG VON THERMOPLASTISCHEN, HOCHMOLEKULAREN COPOLYESTERN

Die Erfindung betrifft ein dreistufiges Verfahren entsprechend dem Oberbegriff des Patentanspruchs 1. Die nach dem Verfahren hergestellten Copolyester, auch Mischpolyester genannt, sind in Abhängigkeit von der Auswahl der Ausgangskomponenten linear oder in geringem Maße verzweigt und gesättigt oder in geringem Maße ungesättigt.

In der DD-PS 246 772 wird ein zweistufiges, diskontinuierliches Verfahren zur Herstellung von thermoplastischem, hochmolekularem, unmodifiziertem Poly-1,4-butylenterephthalat aus Dimethylterephthalat und Butandiol-1,4, d. h. aus zwei Einzelkomponenten, durch Umesterung und Polykondensation in Gegenwart eines Katalysators in der Schmelze unter Ausschluß von Sauerstoff beschrieben. Bei der Polykondensation fällt ein Brüdengemisch, d. h. ein Destillat, an. Dieses wird partiell kondensiert, also fraktioniert. Das durch diese Behandlung erhaltene Brüdenkondensat, d. h. die so erhaltene Fraktion, enthält neben Methanol, Tetrahydrofuran, Wasser, niedermolekularen Hydroxybutylterephthalaten und Dimethylterephthalat mindestens 96 Gew.-% Butandiol-1,4. Bis zu 40 Gew.-% der reinen Diolkomponente in einem Reaktionsansatz werden durch das bei der Polykondensation in einem früheren Reaktionsansatz im Brüdenkondensat angefallene Diol, d. h. durch "Rückdiol", ersetzt. Das durch "Vorbehandlung" des Brüdengemisches erhaltene, das Rückdiol enthaltende Brüdenkondensat wird in die Umesterung zurückgeführt. Das Verfahren, das offenbar ein spezifikationsgerechtes Produkt liefert, kann als ressourcenschonend und vergleichsweise wirtschaftlich bezeichnet werden.

In der US-PS 4 281 104 wird ein dreistufiges Verfahren entsprechend dem Oberbegriff des Patentanspruchs 1 beschrieben. Es handelt sich um ein diskontinuierliches Verfahren zur Herstellung eines thermoplastischen, hochmolekularen Copolyesters aus Dimethylterephthalat, Phthalsäureanhydrid, Azelainsäure, Ethylenglykol und 2,2-Dimethyl-3-hydroxypropyl-2',2'-dimethyl-3'-hydroxypropionat, d. h. aus fünf Einzelkomponenten, durch Umesterung, Veresterung in Gegenwart des Umesterungsproduktes und Polykondensation. Von der Rückführung eines während der Polykondensation angefallenen, Diole enthaltenden Destillates in einem folgenden Reaktionsansatz ist in der Schrift nicht die Rede. Das während der Polykondensation anfallende Brüdenkondensat wird offenbar verworfen.

In der EP-PS 0 126 702 wird eine weitere Variante eines dreistufigen Verfahrens entsprechend dem Oberbegriff des Patentanspruchs 1 beschrieben. Es handelt sich um ein diskontinuierliches Verfahren zur Herstellung eines thermoplastischen, hochmolekularen Copolyesters aus Dimethylterephthalat, Isophthalsäure, Sebazinsäure, Ethylenglykol und 2,2-Dimethylpropandiol-1,3, d. h. aus fünf Einzelkomponenten, durch Veresterung, Umesterung in Gegenwart des Veresterungsproduktes und Polykondensation. Von der Rückführung eines während der Polykondensation angefallenen, Diole enthaltenden Destillates in einem folgenden Reaktionsansatz ist in der Schrift nicht die Rede. Das während der Polykondensation anfallende Brüdenkondensat wird offenbar verworfen.

In der DE-PS 23 36 026 wird eine weitere Variante eines dreistufigen Verfahrens entsprechend dem Oberbegriff des Patentanspruchs 1 beschrieben. Es handelt sich um ein diskontinuierliches Verfahren zur Herstellung eines thermoplastischen, hochmolekularen Copolyesters, und zwar eines Adipinsäure-modifizierten Polyethylenterephthalates und eines Adipinsäure-modifizierten Poly-1,4-butylenterephthalates aus Dimethylterephthalat, Adipinsäure und Ethylenglykol bzw. Butandiol-1,4, d. h. aus jeweils drei Einzelkomponenten, durch getrennte Umesterung und Veresterung, Vereinigung des Umesterungsproduktes und des Veresterungsproduktes und Polykondensation. Von der Rückführung eines während der Polykondensation angefallenen, Diol enthaltenden Destillates in einem folgenden Reaktionsansatz ist in der Schrift nicht die Rede. Das während der Polykondensation anfallende Brüdenkondensat wird offenbar verworfen.

Die Aufgabe der Erfindung war es nun, ein Verfahren zur Herstellung eines thermoplastischen, hochmolekularen Copolyesters bereitzustellen, das den Mangel des geschilderten Standes der Technik überwindet. Das Verfahren soll ressourcenschonend und wirtschaftlich sein und reproduzierbar ein u. a. hinsichtlich Farbzahl und reduzierter Lösungsviskosität spezifikationsgerechtes Produkt liefern.

Die Aufgabe wurde dadurch gelöst, daß bei einem Verfahren entsprechend dem Oberbegriff des Patentanspruchs 1 5 bis 30 Gew.-% der reinen Diolkomponente durch das bei der Polykondensation angefallene Diol(gemisch), dessen Mengenanteil im Destillat gaschromatografisch bestimmt wird, ersetzt und das nicht vorbehandelte, das Diol(gemisch) enthaltende Destillat in die Veresterung zurückgeführt wird.
Die Menge des "Rückdiols" beträgt somit 5 bis 30 Gew.-%, bezogen auf die Summe von reiner Diolkomponente und Rückdiol. In der Regel wird die gesamte reine Diolkomponente in der Umesterung, vorzugsweise zu Beginn der Umesterung, eingesetzt. Das nicht vorbehandelte, das Rückdiol enthaltende Destillat wird in der Regel zu Beginn der Veresterung zugeführt, d. h. vor, während oder unmittelbar nach der Zugabe der Dicarbonsäure bzw. des Dicarbonsäureanhydrids. Das Rückdiol kann auch während der

Veresterung portionenweise oder semikontinuierlich zugeführt werden.

Die Rückführung des Rückdiols in die Veresterung ist verfahrenskritisch. Man erhält nämlich ein nicht spezifikationsgerechtes Produkt, wenn man abweichend von der Lehre der Erfindung das nicht vorbehandelte, das Rückdiol enthaltende Destillat in die Umesterung zurückführt.

Das Verfahren der Erfindung ist grundsätzlich, d. h. hinsichtlich der Merkmale des Oberbegriffs des Patentanspruchs 1, bekannt (siehe beispielsweise US-PS 4 281 104, EP-PS 0 126 702 und DE-PS 23 36 026). Diese Druckschriften sind Teil der vorliegenden Anmeldung.

Ein Beispiel für einen Di($C_1$- bis $C_4$-alkyl)ester einer Dicarbonsäure ist Dimethylterephthalat. Beispiele für Dicarbonsäuren sind Isophthalsäure, Adipinsäure, Azelainsäure, Sebazinsäure und sogenannte Dimersäuren, welche durch Dimerisierung von ungesättigten $C_{18}$-Fettsäuren, wie Linolsäure oder Linolensäure, erhalten werden. Ein Beispiel für ein Dicarbonsäureanhydrid ist Phthalsäureanhydrid. Die Dicarbonsäuren können zum Teil durch Polycarbonsäuren oder ihre Anhydride ersetzt werden. Beispiele sind Trimesinsäure und Trimellitsäureanhydrid.

Beispiele für Diole sind Ethylenglykol, Butandiol-1,4, 2,2-Dimethylpropandiol-1,3, Hexandiol-1,6, 1,4-Bis-(hydroxymethyl)cyclohexan, 2,2-Dimethyl-3-hydroxypropyl-2',2'-dimethyl-3'-hydroxypropionat, Diethylenglykol, Polyethylenglykol, Poly(tetrahydrofuran)diol und ein technisches Gemisch von Diolen der nachstehenden Formel

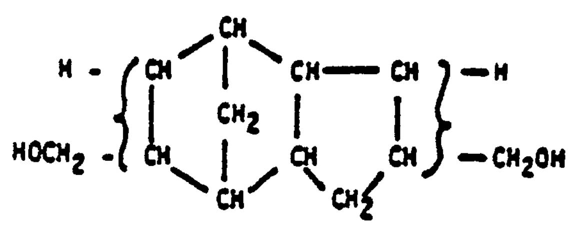

Die Diole können zum Teil durch Polyole, wie beispielsweise Trimethylolpropan, ersetzt werden.

Die drei Stufen des Verfahrens der Erfindung entsprechen im allgemeinen den folgenden Bedingungen.

Umesterung

Dimethylterephthalat und reines Diol, welches in ausreichendem Überschuß zugegeben wird, werden in Gegenwart eines üblichen Katalysators, wie beispielsweise Zinkacetat oder Titankomplex, bei steigender Temperatur bis auf 220 °C erhitzt. Über eine Destillationskolonne mit geregeltem Rückfluß wird Methanol abdestilliert. Die Temperatur am Kopf der Kolonne wird geregelt und beträgt bei Normaldruck 69 bis 71 °C. Die angefallene Methanolmenge wird mit Hilfe gaschromatografischer Analysen der Destillatfraktionen exakt bestimmt. Die Umesterung ist beendet, wenn mindestens 95 % der theoretischen Methanolmenge angefallen ist.

Veresterung

Das bei der Polykondensation in einem vorhergegangenen Reaktionsansatz angefallene, nicht vorbehandelte, das Rückdiol enthaltende Destillat sowie Dicarbonsäure werden in dieser Reihenfolge zum Umesterungsprodukt hinzugegeben. Die gesamte Diolmenge, bezogen auf Dimethylterephthalat und Dicarbonsäure, beträgt 105 bis 130, vorzugsweise 110 bis 120 Mol-%. Die Rückdiolmenge, bezogen auf die gesamte Diolmenge, beträgt 5 bis 30, vorzugsweise 10 bis 20 Gew.-%. Das Gemisch wird bei steigender Temperatur bis auf 230 bis 240 °C erhitzt. Über eine Destillationskolonne mit geregeltem Rückfluß wird Wasser abdestilliert. Die Temperatur am Kopf der Kolonne wird geregelt und beträgt bei Normaldruck 101 bis 120, vorzugsweise 103 bis 115 °C. Das Wasser wird u. a. von unerwünschten Nebenprodukten begleitet, welche mit dem Wasser aus dem Prozeß ausgeschleust werden. Die Veresterung ist beendet, wenn ca. 90 % der theoretischen Wassermenge angefallen ist.

Polykondensation

Das Reaktionsgemisch wird bei sinkendem Druck (bei "steigendem Vakuum") und bei steigender Temperatur je nach eingesetztem Diol bis auf 250 bis 280 °C erhitzt. Nach ca. 2 h beträgt der Druck 2,5

mbar. Die abdestillierenden Brüden werden in einem wassergekühlten Kondensator kondensiert. Der Diolgehalt des Destillates wird gaschromatografisch bestimmt. Das "Rückdiol" enthaltende Destillat wird ohne weitere Behandlung in der Veresterung eines folgenden Reaktionsansatzes eingesetzt.

Danach wird der Druck in möglichst kurzer Zeit, beispielsweise in ca. 0,5 h, bis unter 1 mbar gesenkt.

Die Polykondensation ist beendet, wenn die gewünschte Viskosität erreicht ist. Die Polyesterschmelze wird über eine Kühlvorrichtung ausgetragen.

Die erfindungsgemäß hergestellten Copolyester weisen im allgemeinen eine über die reduzierte Lösungsviskosität (eta $_{red}$) bestimmte Molekularmasse im Bereich von 8 000 bis 40 000, vorzugsweise 12 000 bis 30 000, und eine reduzierte Lösungsviskosität im Bereich von 0,3 bis 1,3, vorzugsweise 0,45 bis 1,2, besonders bevorzugt 0,6 bis 1,0 dl/g auf. Die reduzierte Lösungsviskosität wird mit einer 1,0-gewichtsprozentigen Lösung des Copolyesters in einem Phenol/o-Dichlorbenzol-Gemisch (Gewichtsverhältnis 60:40) bei 25 °C nach DIN 53 728 bestimmt.

Die Copolyester werden als Lackrohstoffe und als Schmelzkleber verwendet. Sie können auch in Lösemittel-enthaltenden Klebstoffen eingesetzt werden.

Den Copolyestern können Hilfs- und Zusatzstoffe zugesetzt werden. Hierfür kommen z. B. Nucleierungs-, Mattierungs-, Fließmittel oder andere Verarbeitungshilfsmittel sowie Pigmente und Füllstoffe in Frage.

Nach dem erfindungsgemäßen Verfahren kann in unerwarteter Weise das bei der Polykondensation anfallende Destillat mit dem darin enthaltenen Diol ohne zusätzliche Aufarbeitung direkt in den Prozeß zurückgeführt werden. Daß diese Arbeitsweise auf die Herstellung von Copolyestern angewendet werden kann, war nach den bisherigen Kenntnissen aus dem Stand der Technik nicht zu erwarten. Durch das erfindungsgemäße Verfahren können Copolyester ressourcenschonend und mit einer guten Wirtschaftlichkeit hergestellt werden.

Die Erfindung wird durch die folgenden Beispiele erläutert.

Die Schmelzpunkte wurden durch DSC-Messungen mit einem Mettler DSC 3000 bei einer Aufheizgeschwindigkeit von 20 K/min bestimmt.

Die Säurezahl und OH-Zahl wurden nach DIN 53 402 bzw. DIN 53 240 bestimmt.

## Beispiele

### Beispiel 1

a. Dimethylterephthalat (3,9 kmol = 757 kg) wurde mit Butandiol-1,4 (5,5 kmol = 495 kg) und 56 g Tetrabutyltitanat in einem Stahlreaktor mit aufgesetzter Destillationskolonne unter Rühren bei gleichmäßig ansteigender Temperatur (Endtemperatur: 220 °C) innerhalb von 2,5 h umgeestert. Das freiwerdende Methanol wurde bei geregeltem Rückfluß abdestilliert. Die Temperatur am Kopf der Destillationskolonne wurde bei Normaldruck unter 71 °C gehalten. Während der Umesterung fielen 250 kg Methanol-Destillat an (96-gewichtsprozentig, d. h. 240 kg Reinmethanol ≙ 96 % der Theorie).

b. Danach wurde Isophthalsäure (0,7 kmol = 116 kg) zugesetzt und bei weiter ansteigender Temperatur (Endtemperatur: 230 °C) innerhalb von 1 h verestert. Das anfallende Reaktionswasser wurde bei geregeltem Rückfluß abdestilliert. Die Temperatur am Kopf der Destillationskolonne wurde bei Normaldruck zwischen 103 und 115 °C gehalten.

c. Die Polykondensation wurde nach einem Zusatz von weiteren 56 g Tetrabutyltitanat unter steigendem Vakuum (Endvakuum: 0,5 mbar) und bei steigender Temperatur (Endtemperatur: 260 °C) durchgeführt. Das überschüssige Butandiol-1,4 wurde abdestilliert, über einen Kühler kondensiert und aufgefangen. Beim Erreichen einer reduzierten Lösungsviskosität von 0,73 dl/g wurde die Polykondensation beendet. Der Schmelzpunkt des Produktes lag bei 202 °C.

Das während der Polykondensation angefallene Destillat (80 kg) wurde durch gaschromatografische Analyse charakterisiert. Es enthielt neben Wasser, Tetrahydrofuran, Oligomeren und nicht identifizierten Bestandteilen 70 Gew.-% (≙ 56 kg) Butandiol-1,4 (Rückdiol).

a.1 Die nachfolgende Charge wurde mit einer um 56 kg reduzierten Anfangsmenge reinem Butandiol-1,4, d. h. mit 4,88 kmol, bei im übrigen gleichen Reaktionsbedingungen wie unter a. beschrieben gestartet.

b.1 Nach beendeter Umesterung und vor der Zugabe der Isophthalsäure wurde die gesamte oben angeführte Destillatmenge zugesetzt. Somit wurden 11,3 Gew.-% des reinen Ausgangsdiols durch Rückdiol ersetzt. Die Reaktionsbedingungen blieben im übrigen unverändert.

c.1 Die Polykondensation wurde unter den gleichen Bedingungen wie bei c. durchgeführt und beim Erreichen der reduzierten Lösungsviskosität von 0,73 dl/g beendet.

Das Produkt entsprach hinsichtlich Schmelzpunkt und Farbe der Spezifikation. Diese Arbeitsweise wurde mit gleichem Ergebnis mehrmals wiederholt.

Beispiel 2

a. Dimethylterephthalat (3,36 kmol = 652 kg) wurde mit Butandiol-1,4 (5,77 kmol = 520 kg) und 210 g Tetrabutyltitanat unter gleichen Bedingungen wie in Beispiel 1 umgeestert.

b. Nach der Umesterung wurden Adipinsäure (1,44 kmol = 210 kg) und 20 g $H_3PO_3$ zugesetzt und wie unter Beispiel 1 angegeben verestert.

c. Vor der Polykondensation wurden 430 g Tetrabutyltitanat zugesetzt. Die Polykondensation wurde unter gleichen Bedingungen wie in Beispiel 1 bis zum Erreichen der reduzierten Lösungsviskosität von 0,9 dl/g durchgeführt. Der Schmelzpunkt des Produktes lag bei 176 °C.

Das während der Polykondensation angefallene Destillat (91 kg) enthielt neben Wasser, Tetrahydrofuran, Oligomeren und nicht identifizierten Bestandteilen 66 Gew.-% ($\widehat{=}$ 60 kg) Butandiol-1,4 (Rückdiol).

Die Arbeitsweise bei der nächsten Charge wurde analog Beispiel 1 geändert. Das im Destillat enthaltene Butandiol-1,4 wurde berücksichtigt, d. h. das gesamte Destillat wurde in die Veresterungsphase vor der Zugabe der Adipinsäure zugefügt. Damit wurden 11,5 Gew.-% des reinen Ausgangsdiols durch Rückdiol ersetzt.

Die Durchführung der Polykondensation blieb unverändert und wurde beim Erreichen der reduzierten Lösungsviskosität von 0,9 dl/g beendet. Das Produkt entsprach hinsichtlich Schmelzpunkt und Farbe der Spezifikation.

Diese Fahrweise wurde mehrmals hintereinander wiederholt ohne negativen Einfluß auf das Endprodukt.

Beispiel 3

a. Dimethylterephthalat (3,13 kmol = 608 kg) wurde mit Butandiol-1,4 (5,8 kmol = 523 kg) und 220 g Tetrabutyltitanat wie in Beispiel 1 beschrieben umgeestert.

b. Nach der Umesterung wurde Isophthalsäure (1,36 kmol = 226 kg) und Adipinsäure (0,16 kmol = 23 kg) sowie 20 g $H_3PO_3$ zugesetztund entsprechend Beispiel 1 verestert.

c. Nach der Zugabe von 430 g Tetrabutyltitanat wurde die Polykondensation wie in Beispiel 1 bis zu einer reduzierten Lösungsviskosität von 0,92 dl/g durchgeführt. Der Schmelzpunkt des Produktes lag bei 172 °C.

Das während der Polykondensation angefallene Destillat (114 kg) enthielt außer Wasser, Tetrahydrofuran, Oligomeren und nicht identifizierten Bestandteilen 70 Gew.-% ($\widehat{=}$ 80 kg) Butandiol-1,4 (Rückdiol).

Die Arbeitsweise bei der nächsten Charge wurde analog Beispiel 1 geändert. Das im Destillat enthaltene Butandiol-1,4 wurde bei der Umesterung berücksichtigt.

Das gesamte Destillat wurde vor der Zugabe der Isophthalsäure und der Adipinsäure in die Veresterungsphase zugesetzt. Damit wurden 15,3 Gew.-% des reinen Ausgangsdiols durch Rückdiol ersetzt.

Der Ablauf der Polykondensation blieb bis zum Erreichen der reduzierten Lösungsviskosität von 0,9 dl/g unverändert.

Das Produkt entsprach hinsichtlich Schmelzpunkt und Farbe der Spezifikation. Diese Fahrweise wurde mehrmals hintereinander ohne negativen Einfluß auf das Endprodukt wiederholt.

Beispiel 4

a. Dimethylterephthalat (2,08 kmol = 404 kg) wurde mit 2,2-Dimethylpropandiol-1,3 (3,53 kmol = 367 kg), Ethylenglykol (0,63 kmol = 39 kg), 1,4-Bis(hydroxymethyl)cyclohexan (1,24 kmol = 179 kg) und 138 g Zinkacetat entsprechend den Bedingungen von Beispiel 1 in 4,5 Stunden umgeestert.

b. Nach der Umesterung wurden Isophthalsäure (2,08 kmol = 345 kg), Triphenylphospit (100 g) und Antimonacetat (300 g) zugesetzt. Die Veresterung wurde gemäß Beispiel 1 durchgeführt.

c. Die nachfolgende Polykondensation wurde wie in Beispiel 1 jedoch mit dem Unterschied durchgeführt, daß die Endtemperaturen bei 280 °C lag. Die Kondensationszeit bis zum Erreichen der reduzierten Lösungsviskosität von 0,58 dl/g betrug 8 Stunden. Das Produkt hatte eine Säurezahl $< 2$ und eine OH-Zahl $> 5$.

Das während der Polykondensation angefallene Destillat (90 kg) enthielt außer Wasser, Oligomeren und nichtidentifizierten Bestandteilen 80 Gew.-% ( 72 kg) Diolanteil [Rückdiol, bestehend aus 64 Gew.-% 2,2-Dimethylpropandiol-1,3, 30,5 Gew.-% Ethylenglykol und 5,5 Gew.-% 1,4-Bis(hydroxymethyl)-cyclohexan].

Die Arbeitsweise bei der nächsten Charge wurde analog Beispiel 1 geändert. Die im Destillat enthaltenen Diole wurden in der Umesterungsphase berücksichtigt.

Das gesamte Destillat wurde vor Zugabe der Isophthalsäure zugesetzt. Damit wurden 12,3 Gew.-% der reinen Ausgangsdiole durch Rückdiol ersetzt. Der Ablauf der Polykondensation entsprach bis zum

Erreichen der reduzierten Lösungsviskosität von 0,58 dl/g unverändert Beispiel 1.

Das Produkt wies Kennzahlen und Farbe entsprechend der Spezifikation auf. Die Arbeitsweise wurde mehrmals hintereinander ohne negativen Einfluß auf das Endprodukt wiederholt.

## Ansprüche

1. Verfahren zur Herstellung von thermoplastischen, hochmolekularen Copolyestern aus wenigstens einem Di($C_1$- bis $C_4$-alkyl)ester einer Dicarbonsäure, wenigstens einer Dicarbonsäure und/oder wenigstens einem Dicarbonsäureanhydrid und wenigstens einem (cyclo)aliphatischen Diol durch diskontinuierliche Umesterung, diskontinuierliche Veresterung und durch diskontinuierliche oder kontinuierliche Polykondensation der Ausgangskomponenten in Gegenwart eines Katalysators in der Schmelze unter Ausschluß von Sauerstoff, wobei entweder die Veresterung in Gegenwart des Umesterungsproduktes oder die Umesterung in Gegenwart des Veresterungsproduktes oder die Veresterung und die Umesterung getrennt durchgeführt werden und in letzterem Fall das Umesterungsprodukt und das Veresterungsprodukt vor der Polykondensation miteinander vereinigt werden, und wobei bei der Polykondensation ein Diol(e) enthaltendes Destillat anfällt,
   dadurch gekennzeichnet,
   daß 5 bis 30 Gew.-% der reinen Diolkomponente durch das bei der Polykondensation angefallene Diol(gemisch) ersetzt und das nicht vorbehandelte, das Diol(gemisch) enthaltende Destillat in die Veresterung zurückgeführt wird.

2. Verfahren nach Anspruch 1,
   dadurch gekennzeichnet,
   daß das nicht vorbehandelte, das "Rückdiol" enthaltende Destillat zu Beginn der Veresterung zurückgeführt wird.

3. Verfahren nach Anspruch 1 oder 2,
   dadurch gekennzeichnet,
   daß 10 bis 20 Gew.-% der reinen Diolkomponente durch "Rückdiol" ersetzt wird.

4. Verfahren nach einem der Ansprüche 1 bis 3,
   dadurch gekennzeichnet,
   daß die erhaltenen Copolyester eine reduzierte Lösungsviskosität,bestimmt mit einer 1,0-gewichtsprozentigen Lösung des Copolyesters in einem Phenol/o-Dichlorbenzol-Gemisch (Gewichtsverhältnis 60:40) bei 25 °C nach DIN 53 728, im Bereich von 0,3 bis 1,3, vorzugsweise 0,45 bis 1,2 dl/g, aufweisen.

5. Verwendung der nach einem der Ansprüche 1 bis 4 erhaltenen Copolyester als Schmelzkleber und als Lackrohstoffe.